(19) Europäisches Patentamt / European Patent Office / Office européen des brevets

(11) EP 4 674 875 A1

(12) **EUROPEAN PATENT APPLICATION**
published in accordance with Art. 153(4) EPC

(43) Date of publication:
**07.01.2026 Bulletin 2026/02**

(21) Application number: **24763894.3**

(22) Date of filing: **27.02.2024**

(51) International Patent Classification (IPC):
***C08F 214/22*** (2006.01) ***C08F 2/18*** (2006.01)

(52) Cooperative Patent Classification (CPC):
(C-Sets available)
**C08F 2/20; C08F 214/225** (Cont.)

(86) International application number:
**PCT/JP2024/006987**

(87) International publication number:
**WO 2024/181415 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2023 JP 2023030840**

(71) Applicant: **Kureha Corporation**
**Chuo-ku**
**Tokyo 103-8552 (JP)**

(72) Inventors:
- **YAMANE Takuya**
  **Tokyo 103-8552 (JP)**
- **IGARASHI Tamito**
  **Tokyo 103-8552 (JP)**
- **KAMATA Shintarou**
  **Tokyo 103-8552 (JP)**

(74) Representative: **Zimmermann & Partner Patentanwälte mbB**
**Postfach 330 920**
**80069 München (DE)**

# (54) METHOD FOR MANUFACTURING VINYLIDENE FLUORIDE COPOLYMER

(57) Provided is a method for manufacturing a vinylidene fluoride copolymer that can suppress polymer deposition inside a reaction vessel during manufacture and produce the vinylidene fluoride copolymer with high productivity. A method for manufacturing a vinylidene fluoride copolymer containing a structural unit derived from vinylidene fluoride and a structural unit derived from a compound represented by Formula (1) set forth below, the method including a step of, in the presence of a suspending agent, suspension-polymerizing a monomer containing vinylidene fluoride and the compound represented by Formula (1),
wherein the suspension-polymerizing step includes:
performing a polymerization reaction at a polymerization temperature equal to or higher than a critical temperature of the vinylidene fluoride and lower than a gelation temperature of the suspending agent; and
before initiation of polymerization, adding a portion of a total addition amount of each of the vinylidene fluoride and the compound represented by Formula (1) to a reaction system, and after temperature has been raised to the polymerization temperature, adding continuously or intermittently the remainder of the total addition amount of each of these compounds to the reaction system.

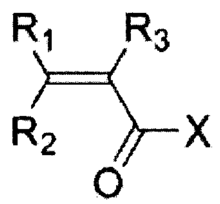

. . . (1)

EP 4 674 875 A1

(52) Cooperative Patent Classification (CPC): (Cont.)

C-Sets
**C08F 214/225, C08F 2/20;**
**C08F 214/225, C08F 220/283**

## Description

### TECHNICAL FIELD

The present invention relates to a method for manufacturing a vinylidene fluoride copolymer.

### BACKGROUND ART

As binders for non-aqueous electrolyte secondary batteries, vinylidene fluoride polymers are widely used. On-vehicle lithium-ion secondary batteries have also been developed. Because on-vehicle lithium-ion secondary batteries are required to have high capacities, many positive electrodes need to be installed. Thus, a binder exhibiting adequate adhesiveness even in a small amount is needed in terms of cost reduction.

For example, Patent Document 1 discloses a vinylidene fluoride copolymer having superior adhesiveness to a metal foil compared to a known vinylidene fluoride copolymer.

Furthermore, recently, with the rapid expansion of electric vehicle market, demands for non-aqueous electrolyte secondary batteries are also increasing. While demands for a binder containing a vinylidene fluoride copolymer, such as a binder described in Patent Document 1, remain at a high level, a method for manufacturing a vinylidene fluoride copolymer having high adhesiveness with even higher productivity is in demand.

As a means for increasing productivity, methods such as (A) shortening a reaction time by increasing an amount of an initiator, (B) increasing a charged amount of a monomer (vinylidene fluoride) before initiation of polymerization, and (C) additionally adding a monomer (vinylidene fluoride) after the temperature has been raised to a polymerization temperature, can be suggested. However, due to the large amount of heat in the initial stage of polymerization in the methods (A) and (B), a facility having high cooling capacity is required. Furthermore, because the amount of heat in the initial stage of polymerization is maximized and the amount of heat decreases due to consumption of monomers as the polymerization progresses, the cooling capacity exhibited by the facility cannot be fully utilized over the entire polymerization process. In the method (C), because the large amount of heat is maintained, high productivity can be achieved within the range of capacity of facility. For example, Patent Document 2 discloses the production of a homopolymer of vinylidene fluoride by the method (C).

### CITATION LIST

### PATENT DOCUMENT

Patent Document 1: WO 2012/090876
Patent Document 2: JP 5274774 B

### SUMMARY OF INVENTION

### TECHNICAL PROBLEM

However, the inventors of the present invention has discovered that, in a method for manufacturing a vinylidene fluoride copolymer, which uses, as copolymerization monomers, vinylidene fluoride and a compound represented by Formula (1) set forth below:

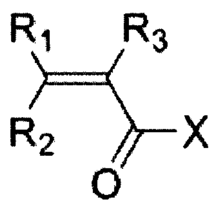

· · · (1)

to achieve high productivity in suspension polymerization, when polymerization was performed at a temperature equal to or higher than the critical temperature of vinylidene fluoride by using the method (C) described above, polymer deposits generated on the inner side of a reaction vessel (polymerization vessel).

The polymer deposits cause a hindrance to the heat transfer of the reaction vessel. If continuous production is

performed, the deposits may accumulate, and thus removal of the generated heat of polymerization may be difficult. Furthermore, if the removal operation of the deposits is performed every time after termination of polymerization, the operating rate of the plant decreases, and productivity deteriorates.

The present invention is completed in light of the issues described above, and an object of the present invention is to provide a method for manufacturing a vinylidene fluoride copolymer, that can suppress polymer deposition inside a reaction vessel during manufacture and produce a vinylidene fluoride copolymer with high productivity.

## SOLUTION TO PROBLEM

As a result of diligent research to solve the issues described above, the inventors of the present invention found that the issues described above can be solved by performing suspension polymerization at a particular polymerization temperature, and thus completed the present invention.

Aspects of the present invention relate to a method for manufacturing a vinylidene fluoride copolymer including suspension-polymerizing at a particular polymerization temperature, as described below.

[1] A method for manufacturing a vinylidene fluoride copolymer containing a structural unit derived from vinylidene fluoride and a structural unit derived from a compound represented by Formula (1) set forth below,

the method including a step of, in the presence of a suspending agent, suspension-polymerizing a monomer containing vinylidene fluoride and the compound represented by Formula (1),
wherein the suspension-polymerizing step includes:

performing a polymerization reaction at a polymerization temperature equal to or higher than a critical temperature of the vinylidene fluoride and lower than a gelation temperature of the suspending agent; and before initiation of polymerization, adding a portion of a total addition amount of each of the vinylidene fluoride and the compound represented by Formula (1) to a reaction system, and after temperature is raised to the polymerization temperature, adding continuously or intermittently the remainder of the total addition amount of each of these compounds to the reaction system.

[Chem. 2]

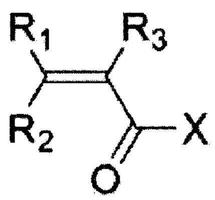

· · · (1)

In Formula (1),

R1, R2, and R3 each independently represent a hydrogen atom, a halogen atom, or an alkyl group having from 1 to 5 carbon atoms,
X is a hydroxy group or a functional group represented by -Y-COOH, and
Y is an atomic group having a molecular weight of 500 or less, the atomic group containing at least one heteroatom selected from the group consisting of an oxygen atom and a nitrogen atom and including a main chain having from 1 to 10 atoms.

[2] The method for manufacturing according to [1], wherein an upper limit of the polymerization temperature is a temperature that is at least 7°C lower than the gelation temperature of the suspending agent.
[3] The method for manufacturing according to [1] or [2], wherein a ratio of a mass of the vinylidene fluoride added to the reaction system continuously or intermittently to a mass of the vinylidene fluoride present in the reaction system at initiation of polymerization is 0.6 or greater.
[4] The method for manufacturing according to any of [1] to [3], wherein a density of the vinylidene fluoride in the reaction system at initiation of polymerization is 450 $kg/m^3$ or greater and 650 $kg/m^3$ or less.
[5] The method for manufacturing according to any of [1] to [4], wherein the vinylidene fluoride copolymer contains, assuming total structural units to be 100 mol%, 0.01 mol% or greater and 10 mol% or less of the structural unit derived

from the compound represented by Formula (1).

## ADVANTAGEOUS EFFECTS OF INVENTION

According to the present invention, a method for manufacturing a vinylidene fluoride copolymer, that can suppress polymer deposition inside a reaction vessel during manufacture and produce a vinylidene fluoride copolymer with high productivity can be provided.

## DESCRIPTION OF EMBODIMENTS

### Method for Manufacturing Vinylidene Fluoride Copolymer

The method for manufacturing a vinylidene fluoride copolymer is a method for manufacturing a vinylidene fluoride copolymer containing a structural unit derived from vinylidene fluoride and a structural unit derived from a compound represented by Formula (1) set forth below.

The method described above includes, in the presence of a suspending agent, suspension-polymerizing a monomer containing vinylidene fluoride and the compound represented by Formula (1) set forth below,
and the suspension-polymerizing step described above includes:

performing a polymerization reaction at a temperature equal to or higher than a critical temperature of the vinylidene fluoride described above and lower than a gelation temperature of the suspending agent described above; and
before initiation of polymerization, adding a portion of a total addition amount of each of the vinylidene fluoride described above and the compound represented by Formula (1) to a reaction system; and after temperature is raised to the polymerization temperature, adding continuously or intermittently the remainder of the total addition amount of each of these compounds to the reaction system.
According to the manufacturing method described above, by performing suspension polymerization at a temperature equal to or higher than a critical temperature of vinylidene fluoride and lower than a gelation temperature of a suspending agent, polymer deposition inside a reaction vessel during manufacture can be suppressed, and a vinylidene fluoride copolymer can be produced with high productivity.

Note that, in the present description, the expression "before initiation of polymerization" means prior to a point of time at which temperature is raised to the polymerization temperature described above is started. The expression "at initiation of polymerization" means a point of time at which temperature is raised to the polymerization temperature described above is started. The expression "during polymerization" or "polymerization time" means a time period from the initiation of polymerization to the termination of polymerization. The expression "at termination of polymerization" means a point of time at which a reaction system reaches a predetermined pressure and emission of a remaining monomer, a formed polymer, water, and the like to outside a reaction vessel (polymerization vessel) is started.

Hereinafter, essential or optional process of the method for manufacturing a vinylidene fluoride copolymer will be described.

### Monomer

In the manufacturing method of the present embodiment, the monomer to be used contains vinylidene fluoride (hereinafter, also referred to as "VDF") and a compound represented by Formula (1) set forth below.

### Compound Represented by Formula (1)

The compound represented by Formula (1) is as follows.

[Chem. 3]

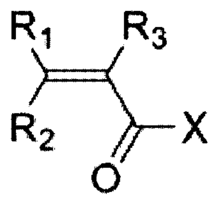

· · · (1)

In Formula (1),

R1, R2, and R3 each independently represent a hydrogen atom, a halogen atom, or an alkyl group having from 1 to 5 carbon atoms,
X is a hydroxy group or a functional group represented by -Y-COOH, and
Y is an atomic group having a molecular weight of 500 or less, the atomic group containing at least one heteroatom selected from the group consisting of an oxygen atom and a nitrogen atom and including a main chain having from 1 to 10 atoms.

From the viewpoint of polymerization reaction, in particular, $R^1$ and $R^2$ are each preferably a substituent having small steric hindrance, and preferably a hydrogen atom or an alkyl group having from 1 to 3 carbon atoms, more preferably a hydrogen atom or a methyl group, and particularly preferably a hydrogen atom.

In a case where X in Formula (1) described above is a functional group represented by -Y-COOH, the molecular weight of an atomic group represented by Y is 500 or less, and preferably 200 or less. When the molecular weight of the atomic group represented by Y is 500 or less, adhesiveness between a vinylidene fluoride copolymer and metal foil tends to be good when the binder composition is used for a mixture layer.
Note that the number of atoms of the main chain of the atomic group represented by Y means the number of atoms of the shortest chain among chains constituting one end of Y bonded to a carbon atom of a carbonyl group to the other end of Y bonded to a carboxy group. Y may be linear or branched.

Note that Y is not limited to a hydrocarbon chain and may include a sulfur atom, a nitrogen atom, an oxygen atom, and the like. Y is particularly preferably an atomic group represented by -COOY'-. Y' in the atomic group is preferably an atomic group having a main chain having from 1 to 18 atoms and a molecular weight of 456 or less. The number of atoms of the main chain is more preferably from 1 to 13, and even more preferably from 1 to 8. Furthermore, the molecular weight of $Y^1$ is preferably 156 or less, and the lower limit value is typically 14.

Examples of the compound represented by Formula (1) include (meth)acrylic acid, 2-carboxyethyl acrylate, 2-carboxyethyl methacrylate, acryloyloxyethyl succinate, methacryloyloxyethyl succinate, acryloyloxypropyl succinate, methacryloyloxypropyl succinate, acryloyloxyethyl phthalic acid, and methacryloyloxyethyl phthalate. Note that, in the present specification, "(meth)acryl" means acryl and/or methacryl.

Additional Monomer

In the manufacturing method of the present embodiments, as long as the effect of the present invention is not impaired, an additional monomer that is different from the vinylidene fluoride and the compound represented by Formula (1) described above may be used. Hereinafter, in the present specification, such a monomer of an optional component is also referred to as "additional monomer".

The additional monomer is not particularly limited, and examples thereof include a fluorine-based monomer that is copolymerizable with vinylidene fluoride, and a hydrocarbon-based monomer, such as ethylene or propylene. Examples of the fluorine-based monomer that is copolymerizable with vinylidene fluoride include vinyl fluoride, trifluoroethylene, tetrafluoroethylene, chlorotrifluoroethylene, hexafluoropropylene, and perfluoroalkyl vinyl ethers represented by perfluoromethyl vinyl ether. Furthermore, one type of the additional monomers described above may be used alone, or two or more types may be used.

Step of Suspension-Polymerizing

The manufacturing method of the present embodiments includes a step of suspension-polymerizing the monomer containing the vinylidene fluoride and the compound represented by Formula (1) described above in the presence of a suspending agent. The suspension polymerization described above is preferably performed in a water-based medium.

### Suspending Agent

The suspending agent is not particularly limited, and examples thereof include cellulose-based suspending agent, such as methyl cellulose, propoxylated methyl cellulose, hydroxyethyl methyl cellulose, and hydroxypropyl methyl cellulose; polyvinyl alcohol; polyethylene oxide; and gelatin. Among these, a cellulose-based suspending agent is preferred from the viewpoint of capability of manufacturing a vinylidene fluoride copolymer, the method being capable of suppressing polymer deposition inside a reaction vessel during manufacture and being capable of manufacturing a vinylidene fluoride copolymer with high productivity.
The used amount of the suspending agent is not particularly limited and, for example, is, based on 100 parts by mass of all the monomers for use in copolymerization, preferably 0.005 parts by mass or greater and 1.0 part by mass or less, and more preferably 0.01 parts by mass or greater and 0.4 parts by mass or less.

### Polymerization Initiator

The polymerization initiator is not particularly limited, and examples thereof include diisopropyl peroxydicarbonate, di-normal-propyl peroxydicarbonate, di-normal-heptafluoropropyl peroxydicarbonate, isobutyryl peroxide, di(chlorofluoroacyl)peroxide, di(perfluoroacyl)peroxide, and t-butyl peroxypivalate. These may be charged together with an organic solvent. Examples of the organic solvent include a hydrocarbon-based solvent, such as isododecane, and a fluorine-based solvent, such as HFE-347pc-f.
The amount of the polymerization initiator to be used is not particularly limited, and it is, for example, based on 100 parts by mass of all the monomers for use in copolymerization, preferably 0.05 parts by mass or greater and 5 parts by mass or less, and more preferably 0.10 parts by mass or greater and 3.0 parts by mass or less.

### Additional Components

In the manufacturing method of the present embodiment, as long as the effect of the present invention is not impaired, an additional component that is different from the vinylidene fluoride, the compound represented by Formula (1), the optionally used additional monomer, and the suspending agent described above may be used. Hereinafter, in the present specification, such an optional component is also referred to as "additional component".
Examples of the additional component include a chain transfer agent.

### Chain Transfer Agent

The chain transfer agent is not particularly limited and examples thereof include ethyl acetate, methyl acetate, diethyl carbonate, acetone, ethanol, n-propanol, acetaldehyde, propylaldehyde, ethyl propionate, propane, and carbon tetrachloride.
The amount of the chain transfer agent to be used is not particularly limited, and it is, based on 100 parts by mass of all the monomers for use in copolymerization, preferably 0.05 mass or greater and 10 parts by mass or less, and more preferably 0.1 parts by mass or greater and 5 parts by mass or less.

### Polymerization Temperature

As described above, the suspension-polymerizing includes performing a polymerization reaction at a polymerization temperature equal to or higher than the critical temperature of the vinylidene fluoride described above and lower than the gelation temperature of the suspending agent described above. In the present specification, the gelation temperature of the suspending agent means a temperature at which the viscosity of a 2% suspending agent aqueous solution changes rapidly when the temperature of the suspending agent aqueous solution is raised from 30°C at a temperature rise rate of 1.0°C/min. Specifically, for example, while the viscosity is measured by using a torsional vibration viscometer, the temperature of the 2% suspending agent aqueous solution is increased, and a temperature at which the viscosity rapidly decreases or increases can be used as the gelation temperature of the suspending agent. Note that the critical temperature of the vinylidene fluoride is 30.1°C.
By performing the suspension polymerization at a temperature, where the upper limit of the polymerization temperature is lower than the gelation temperature of the suspending agent, polymer deposition inside a reaction vessel during manufacture can be suppressed, and a vinylidene fluoride copolymer can be manufactured with high productivity.
The polymerization temperature is preferably high because, when the polymerization temperature is too low, the productivity becomes low due to longer polymerization time, and from the viewpoint of fully utilizing cooling capacity of the

polymerization facility. On the other hand, when the polymerization temperature is closer to the gelation temperature of the suspending agent, polymer deposits are easily generated inside the reaction vessel, and the productivity deteriorates as described above. Thus, the upper limit of the polymerization temperature is preferably a temperature that is at least 5°C lower than the gelation temperature of the suspending agent, more preferably a temperature that is at least 7°C lower than the gelation temperature of the suspending agent, and even more preferably a temperature that is at least 10°C lower than the gelation temperature of the suspending agent. Note that the gelation temperature may be abbreviated as "$T_{gel}$". For example, "$T_{gel}$ -5°C " means a temperature that is 5°C lower than a gelation temperature of a suspending agent.

Method of Adding Monomer

As described above, the suspension-polymerizing includes, before initiation of polymerization, adding a portion of a total addition amount of each of the vinylidene fluoride and the compound represented by Formula (1) to a reaction system, and after temperature is raised to the polymerization temperature described above, adding continuously or intermittently the remainder of the total addition amount of each of these compounds to the reaction system. In the manufacturing method of the present embodiments, the suspension polymerization is preferably performed by using a batch-type reaction vessel. By adding a portion of a total addition amount of the monomer described above to the reaction system before initiation of the polymerization and then adding the remainder of the total addition amount of the monomer described above continuously or intermittently during the polymerization, deposits are not generated in the reaction vessel, and thus the polymer yield per 1 batch can be increased.

The ratio of the mass of the aforementioned vinylidene fluoride added continuously or intermittently to the reaction system based on the mass of the aforementioned vinylidene fluoride present in the reaction system at initiation of polymerization is preferably 0.4 or greater, more preferably 0.6 or greater, and even more preferably 0.8 or greater. By setting the ratio of the amount of the later addition during the polymerization based on the initially charged amount before the initiation of the polymerization to be within the range described above as an aspect of addition of the vinylidene fluoride (VDF), polymer yield per 1 batch can be increased.

The density of the vinylidene fluoride described above in the reaction system at initiation of polymerization is preferably 450 $kg/m^3$ or greater and 650 $kg/m^3$ or less, and more preferably 470 $kg/m^3$ or greater and 620 $kg/m^3$ or less. When the density of the vinylidene fluoride (hereinafter, also referred to as "VDF density") described above is less than 450 $kg/m^3$, the polymerization rate is small, and productivity is deteriorated. On the other hand, when the VDF density is greater than 650 $kg/m^3$, the vinylidene fluoride added later is less likely to be taken into the polymer particle, the polymerization rate may decrease, and/or polymerization proceeds while some vinylidene fluoride that has not been taken into the particle stay suspended, and thus fine powder is generated and increases effluent load.

Examples of preferred aspects of suspension-polymerizing include the following method.

In a pressure-resistant reaction vessel, together with a water-based medium, a suspending agent, and an initiator, a portion of the total addition amount of each of the vinylidene fluoride and the compound represented by Formula (1) are preferably charged to a reaction system. As needed, the additional monomer and the additional component described above may be charged. Then, polymerization is initiated by increasing the temperature to the polymerization temperature described above and then, while the polymerization temperature described above is maintained, the remainder of the total addition amount of each of these compounds are preferably added to the reaction system continuously or intermittently, and the polymerization reaction is preferably performed for a predetermined time period while a predetermined polymerization pressure is maintained. Thereafter, the polymerization reaction is terminated by cooling the reaction vessel, and thus a slurry of a vinylidene fluoride copolymer is obtained.

The polymerization time in the preferred aspect described above is not particularly limited, and it is preferably 24 hours or less, more preferably 20 hours or less, and even more preferably 18 hours or less, in considering the productivity. Furthermore, from the viewpoint of controlling the polymerization temperature (removal of polymerization heat), the polymerization time is preferably 4 hours or longer, more preferably 5 hours or longer, and even more preferably 6 hours or longer.

In the preferred aspect described above, the pressure at the time of polymerization is under increased pressure and, for example, is preferably 3.0 MPa or greater and 15.0 MPa or less.

By performing the suspension polymerization according to the aspects described above, the monomer containing the vinylidene fluoride and the compound represented by Formula (1) can be copolymerized, and thus a vinylidene fluoride copolymer can be obtained.

Note that a liquid contact part of the reaction vessel described above, which comes into contact with the reaction system described above, may be made of carbon steel, such as an SS material, and may be made of a material other than carbon steel. The aforementioned liquid contact part is preferably made of a corrosion-resistant material having superior corrosion resistance compared to the carbon steel because the liquid contact part readily rusts and deposits tend to adhere onto the rust. Examples of the corrosion-resistant material include stainless steel, such as SUS316L, SUS316, SUS304L, and SUS304; titanium and an alloy of titanium.

Vinylidene Fluoride Copolymer

The vinylidene fluoride copolymer obtained by the manufacturing method of the present embodiments contains a structural unit derived from vinylidene fluoride and a structural unit derived from the compound represented by Formula (1), as described above.

Among all the structural units of the vinylidene fluoride copolymer, the structural unit derived from vinylidene fluoride is preferably a main component. The content of the structural unit derived from the vinylidene fluoride is, assuming total structural units to be 100 mol%, preferably 70 mol% or greater, more preferably 80 mol% or greater, even more preferably 90 mol% or greater, and particularly preferably 95 mol% or greater.

The vinylidene fluoride copolymer preferably contains, assuming total structural units to be 100 mol%, 0.01 mol% or greater and 10 mol% or less of the structural unit derived from the compound represented by Formula (1). For such a vinylidene fluoride copolymer, the manufacturing method of the present embodiments can be more suitably employed. Furthermore, the vinylidene fluoride copolymer described above can be suitably used for a binder for a non-aqueous electrolyte secondary battery.

## EXAMPLES

The present invention will be described in further detail hereafter based on Examples and Comparative Examples, but the present invention is not limited to the following examples.

First, manufacturing conditions of the following production examples and evaluation methods will be described.

Manufacturing Conditions and Evaluation Methods

Gelation Temperature of Suspending Agent

A 2% suspending agent solution was prepared, and the temperature thereof was raised from 30°C at the temperature rise rate of 1.0°C/min to determine a starting temperature of viscosity change by using a torsional vibration viscometer, and this temperature was used as a gelation temperature.

Density of VDF in Initial Stage of Polymerization

The density of VDF in the initial stage of the polymerization was calculated based on the following equation.

$$Dv = Mv/(Vc - Vw)$$

Dv: Density of VDF at the initial temperature of the polymerization (kg/$m^3$)
Mw: Initially charged amount of VDF (kg)
Vc: Internal volume of reaction vessel (autoclave) ($m^3$)
Vc can be determined as a volume of water when water is filled in a reaction vessel equipped with equipment used at the time of suspension polymerization, such as an agitator. The internal volume of the reaction vessel can be measured at a room temperature.
Vw: Volume of water in reaction vessel at polymerization initial temperature ($m^3$) (= supplied mass of water (kg)/density of water (kg/$m^3$))

The density of water was calculated based on the following equation.

Density of water (kg/$m^3$) = $1.05761 \times 10^{-5} \times$ (polymerization temperature)$^3$ - $4.86804 \times 10^{-3} \times$ (polymerization temperature)$^2$ - $4.38558 \times 10^{-2} \times$ (polymerization temperature) + $1.00107 \times 10^3$

Charged Amount of Monomer Per Reaction Vessel

The charged amount of monomer per reaction vessel (kg/$m^3$) was calculated by dividing the total amount of the initial charged amount of the monomer and the monomer amount added during the polymerization by the internal volume of the reaction vessel.

Polymer Yield Per Reaction Vessel

The polymer yield per reaction vessel (kg/$m^3$) was calculated by dividing the polymer yield obtained after termination of the polymerization by the internal volume of the reaction vessel.

Polymer Yield Per Unit Time

The polymer yield per unit time (kg/$m^3$/h) was calculated by dividing the polymer yield per reaction vessel by the polymerization time.

Inherent Viscosity

The inherent viscosity of a vinylidene fluoride copolymer was measured as follows. First, 80 mg of the vinylidene fluoride copolymer was dissolved in 20 mL of N,N-dimethylformamide, and the viscosity was measured by using an Ubbelohde viscometer in a 30°C thermostatic bath. Based on the obtained value, the inherent viscosity ($\eta_i$) of the vinylidene fluoride-based polymer was then calculated based on the following equation:

$$\eta_i = (1/C) \bullet \ln(\eta/\eta_0)$$

In the equation above, $\eta$ is a viscosity of the solution, $\eta_0$ is a viscosity of N,N-dimethylformamide alone, which is a solvent, and C is a concentration of the vinylidene fluoride polymer, that is, 0.4 g/dL.

Degree of Deposits

After the polymerization, the condition of deposits in the reaction vessel was visually observed, and the degree of generation of deposits was evaluated based on the following evaluation criteria.

0: No deposition generated on the reaction vessel.
1: A little deposition was observed on the reaction vessel, but stable production was possible with removal operation.
2: A large amount of deposition was observed on the reaction vessel, removal operation required time, and production was difficult.

SUS316L was used for the material of the liquid contact part of the reaction vessel (polymerization vessel).

Production Examples of Vinylidene Fluoride Copolymer

Example 1

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 3.15 g of acryloyloxyethyl succinate (AES), 14.2 g of a 50 wt% diisopropyl peroxy dicarbonate-HFE-347pc-f solution as a polymerization initiator, 14.2 g of ethyl acetate, and 3150 g of vinylidene fluoride (VDF) were charged, and the temperature was raised to 45°C over 2 hours. While the temperature was maintained at 45°C, 3150 g of VDF and 1197 g of an AES aqueous solution (5%) were added while the pressure was maintained at 6.1 MPa. Then, the polymerization was terminated when the pressure became 2.0 MPa. The polymerization time was 13.4 hours. The state of the deposition in the polymerization vessel after the polymerization was observed, and the degree of deposition was evaluated as "0". After the termination of the polymerization, the obtained polymer slurry was dehydrated, washed with water, and further dried at 80°C for 20 hours, and thus polymer powder was obtained. The yield of the polymer calculated based on the supplied amount of the monomer was 98.2%. Furthermore, the inherent viscosity of the obtained polymer was 2.50 dL/g.

Example 2

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 3.15 g of acryloyloxyethyl succinate (AES), 14.2 g of a 50 wt% diisopropyl peroxy dicarbonate-HFE-347pc-f solution as a polymerization initiator, 14.2 g of ethyl acetate, and 3150 g of vinylidene fluoride (VDF) were charged, and the temperature was raised to 45°C over 2 hours. While the temperature was maintained at 45°C, 1575 g of VDF and 977 g of an AES

aqueous solution (5%) were added while the pressure was maintained at 6.1 MPa. Then, the polymerization was terminated when the pressure became 2.0 MPa. The polymerization time was 10.2 hours. The state of the deposition in the polymerization vessel after the polymerization was observed, and the degree of deposition was evaluated as "0". After the termination of the polymerization, the obtained polymer slurry was dehydrated, washed with water, and further dried at 80°C for 20 hours, and thus polymer powder was obtained. The yield of the polymer calculated based on the supplied amount of the monomer was 96.1%. Furthermore, the inherent viscosity of the obtained polymer was 2.30 dL/g.

Example 3

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 3.15 g of acryloyloxyethyl succinate (AES), 37.8 g of a 50 wt% t-butyl peroxypivalate-HFE-347pc-f solution as a polymerization initiator, 18.9 g of ethyl acetate, and 3150 g of vinylidene fluoride (VDF) were charged, and the temperature was raised to 50°C over 2 hours. While the temperature was maintained at 50°C, 3150 g of VDF and 1197 g of an AES aqueous solution (5%) were added while the pressure was maintained at 6.7 MPa. Then, the polymerization was terminated when the pressure became 2.5 MPa. The polymerization time was 16.0 hours. The state of the deposition in the polymerization vessel after the polymerization was observed, and the degree of deposition was evaluated as "1". After the termination of the polymerization, the obtained polymer slurry was dehydrated, washed with water, and further dried at 80°C for 20 hours, and thus polymer powder was obtained. The yield of the polymer calculated based on the supplied amount of the monomer was 97.7%. Furthermore, the inherent viscosity of the obtained polymer was 2.43 dL/g.

Example 4

In an autoclave having an internal capacity of 0.01521 $m^3$, 8600 g of ion-exchanged water as a dispersing medium, 4.7 g of Metolose 90SH-100 (available from Shin-Etsu Chemical Co., Ltd.) as a cellulose-based suspending agent, 3.15 g of acryloyloxyethyl succinate (AES), 20.5 g of a 50 wt% t-butyl peroxypivalate-HFE-347pc-f solution as a polymerization initiator, 22.1 g of ethyl acetate, and 3150 g of vinylidene fluoride (VDF) were charged, and the temperature was raised to 55°C over 2 hours. While the temperature was maintained at 55°C, 3150 g of VDF and 1197 g of an AES aqueous solution (5%) were added while the pressure was maintained at 7.3 MPa. Then, the polymerization was terminated when the pressure became 2.5 MPa. The polymerization time was 14.0 hours. The state of the deposition in the polymerization vessel after the polymerization was observed, and the degree of deposition was evaluated as "0". After the termination of the polymerization, the obtained polymer slurry was dehydrated, washed with water, and further dried at 80°C for 20 hours, and thus polymer powder was obtained. The yield of the polymer calculated based on the supplied amount of the monomer was 97.8%. Furthermore, the inherent viscosity of the obtained polymer was 2.42 dL/g.

Example 5

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 3.15 g of carboxyethyl acrylate (CEA), 28.4 g of a 50 wt% diisopropyl peroxy dicarbonate-HFE-347pc-f solution as a polymerization initiator, and 3150 g of vinylidene fluoride (VDF) were charged, and the temperature was raised to 45°C over 2 hours. While the temperature was maintained at 45°C, 3150 g of VDF and 1218 g of a CEA aqueous solution (7.5%) were added while the pressure was maintained at 6.1 MPa. Then, the polymerization was terminated when the pressure became 2.0 MPa. The polymerization time was 12.8 hours. The state of the deposition in the polymerization vessel after the polymerization was observed, and the degree of deposition was evaluated as "0". After the termination of the polymerization, the obtained polymer slurry was dehydrated, washed with water, and further dried at 80°C for 20 hours, and thus polymer powder was obtained. The yield of the polymer calculated based on the supplied amount of the monomer was 98.1%. Furthermore, the inherent viscosity of the obtained polymer was 2.38 dL/g.

Example 6

In an autoclave having an internal capacity of 0.01521 $m^3$, 8934 g of ion-exchanged water as a dispersing medium, 5.7 g of Metolose SM-100 (available from Shin-Etsu Chemical Co., Ltd.) as a cellulose-based suspending agent, 3.78 g of acryloyloxyethyl succinate (AES), 24.6 g of a 50 wt% diisopropyl peroxy dicarbonate-HFE-347pc-f solution as a polymerization initiator, 11.7 g of ethyl acetate, and 3779 g of vinylidene fluoride (VDF) were charged, and the temperature was raised to 43°C over 2 hours. While the temperature was maintained at 43°C, 3779 g of VDF and 1026 g of an AES aqueous solution (7%) were added while the pressure was maintained at 6.3 MPa. Then, the polymerization was terminated when the pressure became 2.0 MPa. The polymerization time was 10.4 hours. The state of the deposition in the

polymerization vessel after the polymerization was observed, and the degree of deposition was evaluated as "0". After the termination of the polymerization, the obtained polymer slurry was dehydrated, washed with water, and further dried at 80°C for 20 hours, and thus polymer powder was obtained. The yield of the polymer calculated based on the supplied amount of the monomer was 98.6%. Furthermore, the inherent viscosity of the obtained polymer was 2.71 dL/g.

Example 7

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 3.15 g of acrylic acid (AA), 37.8 g of a 50 wt% diisopropyl peroxy dicarbonate-HFE-347pc-f solution as a polymerization initiator, and 3150 g of vinylidene fluoride (VDF) were charged, and the temperature was raised to 45°C over 2 hours. While the temperature was maintained at 45°C, 3150 g of VDF and 1197 g of an AA aqueous solution (5%) were added while the pressure was maintained at 6.1 MPa. Then, the polymerization was terminated when the pressure became 2.0 MPa. The polymerization time was 15.0 hours. The state of the deposition in the polymerization vessel after the polymerization was observed, and the degree of deposition was evaluated as "0". After the termination of the polymerization, the obtained polymer slurry was dehydrated, washed with water, and further dried at 80°C for 20 hours, and thus polymer powder was obtained. The yield of the polymer calculated based on the supplied amount of the monomer was 98.0%. Furthermore, the inherent viscosity of the obtained polymer was 2.00 dL/g.

Comparative Example 1

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 3.15 g of acryloyloxyethyl succinate (AES), 20.5 g of a 50 wt% t-butyl peroxypivalate-HFE-347pc-f solution as a polymerization initiator, 22.1 g of ethyl acetate, and 3150 g of vinylidene fluoride (VDF) were charged, and the temperature was raised to 55°C over 2 hours. While the temperature was maintained at 55°C, 3150 g of VDF and 1197 g of an AES aqueous solution (5%) were added while the pressure was maintained at 7.3 MPa. Then, the polymerization was terminated when the pressure became 2.5 MPa. The polymerization time was 13.9 hours. The state of the deposition in the polymerization vessel after the polymerization was observed, and the degree of deposition was evaluated as "2". After the termination of the polymerization, the obtained polymer slurry was dehydrated, washed with water, and further dried at 80°C for 20 hours, and thus polymer powder was obtained. The yield of the polymer calculated based on the supplied amount of the monomer was 97.8%. Furthermore, the inherent viscosity of the obtained polymer was 2.40 dL/g.

Comparative Example 2

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 3.15 g of acrylic acid (AA), 31.5 g of a 50 wt% t-butyl peroxypivalate-HFE-347pc-f solution as a polymerization initiator, and 3150 g of vinylidene fluoride (VDF) were charged, and the temperature was raised to 55°C over 2 hours. While the temperature was maintained at 55°C, 3150 g of VDF and 1197 g of an AA aqueous solution (5%) were added while the pressure was maintained at 7.3 MPa. Then, the polymerization was terminated when the pressure became 2.5 MPa. The polymerization time was 16.2 hours. The state of the deposition in the polymerization vessel after the polymerization was observed, and the degree of deposition was evaluated as "2". After the termination of the polymerization, the obtained polymer slurry was dehydrated, washed with water, and further dried at 80°C for 20 hours, and thus polymer powder was obtained. The yield of the polymer calculated based on the supplied amount of the monomer was 97.5%. Furthermore, the inherent viscosity of the obtained polymer was 2.73 dL/g.

Comparative Example 3

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 3.15 g of carboxyethyl acrylate (CEA), 20.5 sg of a 50 wt% t-butyl peroxypivalate-HFE-347pc-f solution as a polymerization initiator, 15.8 g of ethyl acetate, and 3150 g of vinylidene fluoride (VDF) were charged, and the temperature was raised to 55°C over 2 hours. While the temperature was maintained at 55°C, 3150 g of VDF and 1197 g of a CEA aqueous solution (5%) were added while the pressure was maintained at 7.3 MPa. Then, the polymerization was terminated when the pressure became 2.5 MPa. The polymerization time was 17.0 hours. The state of the deposition in the polymerization vessel after the polymerization was observed, and the degree of deposition was evaluated as "2". After the termination of the polymerization, the obtained polymer slurry was dehydrated, washed with water, and further dried at 80°C for 20 hours,

and thus polymer powder was obtained. The yield of the polymer calculated based on the supplied amount of the monomer was 97.7%. Furthermore, the inherent viscosity of the obtained polymer was 2.54 dL/g.

Reference Example 1

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 3.15 g of acryloyloxyethyl succinate (AES), 9.45 g of a 50 wt% t-butyl peroxypivalate-HFE-347pc-f solution as a polymerization initiator, 15.8 g of ethyl acetate, and 3150 g of vinylidene fluoride (VDF) were charged, and the temperature was raised to 55°C over 2 hours. While the temperature was maintained at 55°C, 567 g of an AES aqueous solution (5%) was added while the pressure was maintained at 6.7 MPa. Then, the polymerization was terminated when the pressure became 2.5 MPa. The polymerization time was 11.0 hours. The state of the deposition in the polymerization vessel after the polymerization was observed, and the degree of deposition was evaluated as "0". After the termination of the polymerization, the obtained polymer slurry was dehydrated, washed with water, and further dried at 80°C for 20 hours, and thus polymer powder was obtained. The yield of the polymer calculated based on the supplied amount of the monomer was 97.0%. Furthermore, the inherent viscosity of the obtained polymer was 2.50 dL/g.

Reference Example 2

In an autoclave having an internal capacity of 0.01521 $m^3$, 8600 g of ion-exchanged water as a dispersing medium, 4.7 g of Metolose SM-100 (available from Shin-Etsu Chemical Co., Ltd.) as a cellulose-based suspending agent, 6.3 g of a 50 wt% t-butyl peroxypivalate-HFE-347pc-f solution as a polymerization initiator, 41.0 g of ethyl acetate, and 3150 g of vinylidene fluoride (VDF) were charged, and the temperature was raised to 55°C over 2 hours. While the temperature was maintained at 55°C, 4095 g of VDF was added while the pressure was maintained at 6.7 MPa. Then, the polymerization was terminated when the pressure became 2.5 MPa. The polymerization time was 14.2 hours. The state of the deposition in the polymerization vessel after the polymerization was observed, and the degree of deposition was evaluated as "0". After the termination of the polymerization, the obtained polymer slurry was dehydrated, washed with water, and further dried at 80°C for 20 hours, and thus polymer powder was obtained. The yield of the polymer calculated based on the supplied amount of the monomer was 97.2%. Furthermore, the inherent viscosity of the obtained polymer was 2.12 dL/g.

For each of the examples described above, the gelation temperature of the suspending agent, the monomer density in the initial stage of the polymerization, the charged amount of the monomer per reaction vessel, the polymer yield per reaction vessel, and the polymer yield per unit time were calculated. Results are presented in Tables 1 and 2. Note that, in Table 1 and Table 2, "continuous addition of VDF" means that the VDF was added later during the polymerization.

[Table 1]

| | Example 1 | Example 2 | Example 3 | Example 4 | Example 5 | Example 6 | Example 7 |
|---|---|---|---|---|---|---|---|
| Comonomer | AES | AES | AES | AES | CEA | AES | AA |
| Continuous addition of VDF | Yes | Yes | Yes | Yes | Yes | Yes | Yes |
| Amount of continuous addition of VDF/initially charged VDF amount | 1.0 | 0.5 | 1.0 | 1.0 | 1.0 | 1.0 | 1.0 |
| Polymerization temperature (°C) | 45 | 45 | 50 | 55 | 45 | 43 | 45 |
| Suspending agent | SM-100 | SM-100 | SM-100 | 90SH-100 | SM-100 | SM-100 | SM-100 |
| Gelation temperature of suspending agent (°C) | 55 | 55 | 55 | 70 | 55 | 55 | 55 |
| Density of VDF in initial stage of polymerization (kg/$m^3$) | 483 | 483 | 484 | 486 | 483 | 610 | 483 |

(continued)

| | Example 1 | Example 2 | Example 3 | Example 4 | Example 5 | Example 6 | Example 7 |
|---|---|---|---|---|---|---|---|
| Charged amount of monomer per reaction vessel (kg/m$^3$) | 418 | 314 | 418 | 418 | 420 | 502 | 418 |
| Polymer yield per reaction vessel (kg/m$^3$) | 411 | 302 | 409 | 409 | 412 | 495 | 410 |
| Polymerization time (h) | 13.4 | 10.2 | 16.0 | 14.0 | 12.8 | 10.4 | 15.0 |
| Polymer yield per unit time (kg/m$^3$/h) | 30.7 | 29.6 | 25.5 | 29.2 | 32.2 | 47.6 | 27.3 |
| Inherent viscosity (dL/g) | 2.50 | 2.30 | 2.43 | 2.42 | 2.38 | 2.71 | 2.00 |
| Degree of deposition | 0 | 0 | 1 | 0 | 0 | 0 | 0 |

[Table 2]

| | Comparative Example 1 | Comparative Example 2 | Comparative Example 3 | Reference Example 1 | Reference Example 2 |
|---|---|---|---|---|---|
| Comonomer | AES | AA | CEA | AES | - |
| Continuous addition of VDF | Yes | Yes | Yes | No | Yes |
| Amount of continuous addition of VDF/initially charged VDF amount | 1.0 | 1.0 | 1.0 | 0.0 | 1.3 |
| Polymerization temperature (°C) | 55 | 55 | 55 | 55 | 55 |
| Suspending agent | SM-100 | SM-100 | SM-100 | SM-100 | SM-100 |
| Gelation temperature of suspending agent (°C) | 55 | 55 | 55 | 55 | 55 |
| Density of VDF in initial stage of polymerization (kg/m$^3$) | 486 | 486 | 486 | 486 | 486 |
| Charged amount of monomer per reaction vessel (kg/m$^3$) | 418 | 418 | 418 | 209 | 476 |
| Polymer yield per reaction vessel (kg/m$^3$) | 409 | 408 | 409 | 203 | 463 |
| Polymerization time (h) | 13.9 | 16.2 | 17.0 | 11.0 | 14.2 |
| Polymer yield per unit time (kg/m$^3$/h) | 29.4 | 25.2 | 24.0 | 18.4 | 32.6 |
| Inherent viscosity (dL/g) | 2.40 | 2.73 | 2.54 | 2.50 | 2.12 |
| Degree of deposition | 2 | 2 | 2 | 0 | 0 |

From the results of Examples 1 to 7 in Table 1 and Comparative Examples 1 to 3 in Table 2, it was found that, by performing the suspension polymerization at a temperature, where the upper limit of the polymerization temperature is lower than the gelation temperature of the suspending agent, polymer deposition inside a reaction vessel during manufacture can be suppressed, and a vinylidene fluoride copolymer can be obtained with high productivity.

**Claims**

**1.** A method for manufacturing a vinylidene fluoride copolymer comprising a structural unit derived from vinylidene

fluoride and a structural unit derived from a compound represented by Formula (1) set forth below,

the method comprising a step of, in the presence of a suspending agent, suspension-polymerizing a monomer containing vinylidene fluoride and the compound represented by Formula (1),
wherein the suspension-polymerizing step includes:

performing a polymerization reaction at a polymerization temperature equal to or higher than a critical temperature of the vinylidene fluoride and lower than a gelation temperature of the suspending agent; and before initiation of polymerization, adding a portion of a total addition amount of each of the vinylidene fluoride and the compound represented by Formula (1) to a reaction system, and after temperature is raised to the polymerization temperature, adding continuously or intermittently the remainder of the total addition amount of each of these compounds to the reaction system:

[Chem. 1]

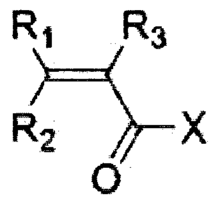

· · · (1)

where in Formula (1),
R1, R2, and R3 each independently represent a hydrogen atom, a halogen atom, or an alkyl group having from 1 to 5 carbon atoms,
X is a hydroxy group or a functional group represented by -Y-COOH, and
Y is an atomic group having a molecular weight of 500 or less, the atomic group containing at least one heteroatom selected from the group consisting of an oxygen atom and a nitrogen atom and including a main chain having from 1 to 10 atoms.

**2.** The method for manufacturing according to claim 1, wherein an upper limit of the polymerization temperature is a temperature that is at least 7°C lower than the gelation temperature of the suspending agent.

**3.** The method for manufacturing according to claim 1 or 2, wherein a ratio of a mass of the vinylidene fluoride added to the reaction system continuously or intermittently to a mass of the vinylidene fluoride present in the reaction system at initiation of polymerization is 0.6 or greater.

**4.** The method for manufacturing according to claim 1 or 2, wherein a density of the vinylidene fluoride in the reaction system at initiation of polymerization is 450 $kg/m^3$ or greater and 650 $kg/m^3$ or less.

**5.** The method for manufacturing according to claim 1 or 2, wherein the vinylidene fluoride copolymer contains, assuming total structural units to be 100 mol%, 0.01 mol% or greater and 10 mol% or less of the structural unit derived from the compound represented by Formula (1).

**INTERNATIONAL SEARCH REPORT**

International application No. **PCT/JP2024/006987**

**A. CLASSIFICATION OF SUBJECT MATTER**

***C08F 214/22***(2006.01)i; ***C08F 2/18***(2006.01)i
FI: C08F214/22; C08F2/18

According to International Patent Classification (IPC) or to both national classification and IPC

**B. FIELDS SEARCHED**

Minimum documentation searched (classification system followed by classification symbols)

C08F214/22; C08F2/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN); Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| A | WO 2020/017561 A1 (KUREHA CORP.) 23 January 2020 (2020-01-23) | 1-5 |
| A | JP 2020-502336 A (SOLVAY SPECIALTY POLYMERS ITALY S.P.A.) 23 January 2020 (2020-01-23) | 1-5 |
| A | JP 2015-172101 A (KUREHA CORP.) 01 October 2015 (2015-10-01) | 1-5 |
| A | JP 2010-90298 A (KUREHA CORP.) 22 April 2010 (2010-04-22) | 1-5 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 March 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/006987**

| Patent document cited in search report | Publication date (day/month/year) | Patent family member(s) | Publication date (day/month/year) |
|---|---|---|---|
| WO 2020/017561 A1 | 23 January 2020 | EP 3825336 A1<br>CN 112368307 A<br>KR 10-2021-0024157 A | |
| JP 2020-502336 A | 23 January 2020 | US 2020/0190239 A1<br>WO 2018/114753 A1<br>EP 3559052 A1<br>CN 110114375 A<br>KR 10-2019-0097058 A | |
| JP 2015-172101 A | 01 October 2015 | US 2017/0015772 A1<br>WO 2015/137137 A1<br>EP 3118230 A1<br>KR 10-2016-0114110 A<br>CN 106103508 A | |
| JP 2010-90298 A | 22 April 2010 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012090876 A
- JP 5274774 B